# EUROPÄISCHE PATENTSCHRIFT

(11) **EP 1 035 459 B1**
(45) Veröffentlichungstag und Bekanntmachung des Hinweises auf die Patenterteilung: **03.07.2002**
(21) Anmeldenummer: 00103232.5
(22) Anmeldetag: 17.02.2000
(51) Int. Cl.: G05D 27/00, G06F 1/00, G06F 3/12, G06F 9/44, G05B 9/03, H04L 12/24

(54) **Prozessautomation**
Process automation
Automatisme d'un procédé

(30) Priorität: 08.03.1999 DE 19910069
(43) Veröffentlichungstag der Anmeldung: 13.09.2000
(73) Patentinhaber: Renner, Peter, 51515 Kürten (DE)
(72) Erfinder: Renner, Peter, 51515 Kürten (DE)
(74) Vertreter: Nau, Walter, Dipl.-Ing.

(56) Entgegenhaltungen:
- EP-A- 0 449 458
- DD-A- 272 490
- DE-A- 2 740 056

## Beschreibung

Die Erfindung bezieht sich auf ein Automatisierungssystem, dessen Struktur die klassischen drei Ebenen (Schichten) Leitebene, Prozessebene und Feldebene enthält.

In der Literatur wird zur Darstellung solcher Automatisierungssysteme die Prozesspyramide verwendet. Es ist ein Dreieck mit der Spitze nach oben dessen Fläche in drei horizontale Flächenteile (Schichten) aufgeteilt ist. Die Basisfläche ist als Feldebene, die mittlere Fläche als Prozessebene, und die Fläche zur Spitze ist als Leitebene gekennzeichnet.

Die Feldebene beinhaltet die physischen Schnittstellen zum Prozess, über die die Prozessdaten erfasst werden und in Echtzeit an die Prozessebene weitergegeben werden. Zudem werden Steuer- und Regelwerte von der Prozessebene empfangen und an den Prozess weitergegeben.

Die mittlere (Prozess-) Ebene empfängt die Prozess-Signale von der Feldebene, berechnet die Steuer- und Regelwerte und gibt sie an die Feldebene weiter. Zudem ist sie zum Datenaustausch über einen Bus mit der Leitebene verbunden.

Die Leitebene beinhaltet einen oder mehrere Rechner (PC oder mittlere Datentechnik), die miteinander vernetzt sind. Aufgabe der Leitebene ist es, die Daten aufzubereiten und zu archivieren. Sie enthält ferner die Mensch/Maschine Schnittstelle, ermöglicht es den Prozess zu bedienen und zu beobachten, erledigt übergeordnete Steuerungen betrieblicher Abläufe und ermöglicht die Prozessüberwachung mit der Ausgabe von Störungsprotokollen.

Die drei Ebenen sind meistens durch standardisierte Busse miteinander verbunden. Es ist anzumerken, dass *der* Datenaustausch zwischen Feldund Prozessebene wegen der zeitkritischen Steuer- und Regelfunktionen in Echtzeit stattfinden muss.

Ein in der beschriebenen Form organisiertes *Automatisierungs-System* hat mannigfache Nachteile. Alle drei Ebenen sind online miteinander verbunden. Unter online ist zu verstehen, dass die aufgenommenen Messwerte durch die unterste (Feld)ebene bis zur Leitebene, unter Berücksichtigung der notwendigen Messwertwandlungen, durchgereicht werden. Während der Laufzeit des Systems müssen die drei Ebenen verfügbar sein. Der technische Aufwand für solche Systeme ist beträchtlich, wodurch die Verfügbarkeit schon dadurch vermindert wird. Häufig sind Ausfälle in der Leitebene zu beobachten. Dies ist begründet durch die Verwendung des Massenartikels PC, den man als Konsumprodukt bezeichnen muss. Solche Konsumprodukte sind nicht nach den Regeln für Industrieprodukte konstruiert. Hinzu kommt, dass meist Windows Betriebssysteme auf den Rechnern installiert sind, die für Ihre unsichere Arbeitsweise bekannt sind. Die Verfügbarkeit ist inzwischen zu einem schwerwiegenden Problem geworden.

Durch die Umformungen der Messwerte und die Zeit, die erforderlich ist, um sie über die verschiedenen Bussysteme zwischen den Ebenen und innerhalb der Leitebene zu transportieren, leidet die Messdichte, so dass die Messrate an den Auswerterechnern derartig beschränkt ist, dass besonders bei schnellen Prozessen eine Prozessanalyse nicht möglich ist.

Der Erfindung liegt die Aufgabe zugrunde, diese Mängel zu beseitigen. Dies geschieht erfindungsgemäß dadurch, dass ein Speicher in den unteren Ebenen (Feld- und/oder Prozess-Ebene) vorgesehen wird und die Daten mit einem Zeitstempel versehen werden.

Hierdurch ergibt sich eine andere Struktur der Datenübertragung. Die Leitebene ist nun aus der Kette der online Datenübertragung ausgegliedert. Sie kann nach Belieben offline oder, falls erforderlich, auch online auf die Daten zugreifen. Eine online Verbindung ist z.B erforderlich, wenn der Prozess bedient und beobachtet werden soll. Bei einer Störung innerhalb der Leitebene entstehen keine Datenlücken mehr, da nach Wiederherstellung der Funktion auf die gespeicherten Daten zugegriffen werden kann.

Aus betrieblichen Gründen z.B. bei Störereignissen ist in wenigen Fällen eine schnelle Reaktion via Leitebene erforderlich. Hierfür ist ein spezielles Online-Speichersegment vorgesehen, in dem diese Daten abgelegt werden. Wenn Daten in diesem Speichersegment auflaufen, so kann mit Hilfe einer Unterbrechungsfunktion oder eines Labels ein Zwang ausgelöst werden, diese Daten schnell in der Leitebene zu bearbeiten.

Die Daten können nun, weil die wichtigsten Verzögerungsfaktoren ausgeschaltet sind, mit einer hohen Datendichte in den Zwischenspeicher abgelegt werden. Durch den Zeitstempel ist die exakte zeitliche Zuordnung der zugrundeliegenden Ereignisse gewährleistet. Somit sind die Voraussetzungen für eine erfolgreiche Prozessanalyse geschaffen. Da nun die Rechner der Leitebene nicht mehr online zugeschaltet sind, können die Rechner auch für andere Aufgaben genutzt werden. Damit wird es nicht mehr erforderlich sein, spezielle Rechner für die Aufgaben der Leitebene vorzusehen. Es können die vorhandenen vernetzten Arbeitsplatzrechner genutzt werden. Ebenso kann das ebenfalls vorhandene Firmennetzwerk für die Datenübertragung genutzt werden.

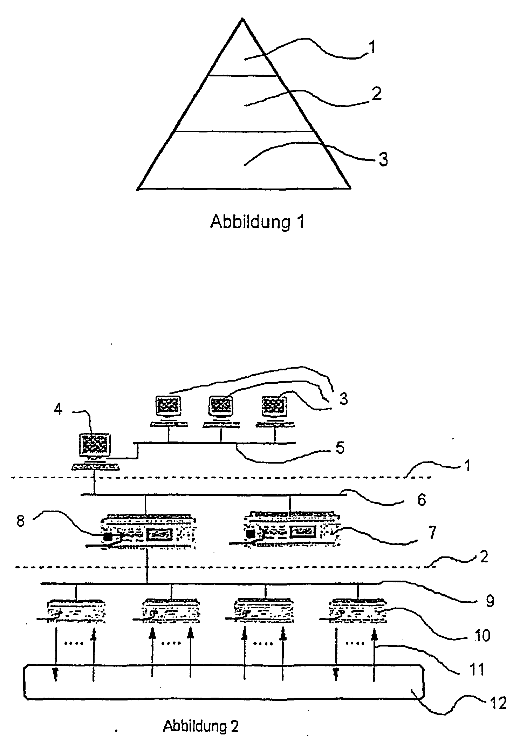

Im folgenden ist ein Ausführungsbeispiel der Erfindung unter Bezugnahme auf die Abbildung 1 und 2 beschrieben:

Die Abbildung 1 stellt das 3 Schichten-Modell der Automatisierungspyramide dar.

Abbildung 2 zeigt eine schematische Darstellung einer Einrichtung zur Prozessautomation entsprechend des drei Schichten-Modells.

In Abbildung 1 ist 1 ist die Leitebene, 2 die Prozessebene und 3 die Feldebene. Die Feldebene 3 beinhaltet die physischen Schnittstellen zum Prozess und liefert die Messwerte über einen Feldbus an die Prozessebene 2. Die Prozessebene 2 führt Prozesssteuer- und Regel-Funktionen aus und speichert analoge und digitale Prozessdaten mit Zeitstempel und stellt sie der Leitebene 1 zur Verfügung.

In Abbildung 2 ist
- 1: ist die gestrichelte Trennlinie zwischen der Leitebene und der Prozessebene.
- 2: ist die gestrichelte Trennlinie zwischen der Prozessebene und der Feldebene.
- 3: sind Rechner der Leitebene.
- 4: ist ein Rechner der die Daten von der Prozessebene sammelt, und er ist gleichzeitig Server in der Leitebene.
- 5: ist Darstellung des Netzes der Leitebene.
- 6: ist der Bus, der die Geräte der Prozessebene miteinander und mit dem Rechner der Leitebene verbindet.
- 7 und 8: sind die Geräte der Prozessebene.
- 9: ist der Feldbus, der die Geräte der Feldebene miteinander und mit den Geräten der Prozessebene verbindet.
- 10: sind die Geräte der Feldebene mit ihren physikalischen Schnittstellen zum Prozess.
- 11: sind die schematisch dargestellten Signalleitungen zum Prozess.
- 12: ist der schematisch dargestellte Prozess, den es zu automatisieren gilt.

### Die Funktion ist folgende:

Die Geräte 10 der Feldebene erfassen die Messdaten (analog und digital) vom Prozess 12 über die Signalleitungen 11.
Die Analogdaten werden durch Analog-Digital Wandler in digitale Werte gewandelt. Bei den Analogdaten handelt es sich typisch um Drücke, Temperaturen, Durchflüsse etc. Diese Analogdaten werden von spezialisierten Sensoren geliefert.

Bei den Digitaldaten handelt es sich um Vorgänge, die einen statischen Zustand repräsentieren, z.B. eine Klappe ist geöffnet/geschlossen, ein Aggregat ist ein/ausgeschaltet, oder um dynamische Vorgänge, z.B. einer Drehzahl. Der Drehzahlsensor liefert eine Impulsreihe, deren Frequenz den Wert der Drehzahl repräsentiert.

Die so erfassten nun digital vorliegenden Daten werden mit einem Zeitstempel, der auch das Datum enthalten kann, versehen und seriell durch ein geeignetes Busprotokolls über den Feldbus 9 an die Geräte 7 und 8 der Prozessebene weitergegeben. In der gleichen Weise erhalten die spezialisierten Geräte 10 der Feldebene Daten von den Geräten 7 und 8 der Prozessebene über den Felbus 9, die Steuer und Regelwerte enthalten, die über geeignete Aktoren an den Prozess 12 weitergegeben werden.

Aufgabe der Geräte 7 und 8 der Prozessebene ist es, die von den Geräten 10 der Feldebene erhaltenen Daten zu speichern und damit für den Bedarf der Leitebene vorzuhalten. Ferner werden die Daten zu Steuer- und Regelwerten verknüpft und an die Geräte 10 via Feldbus 9 zurückgegeben mit dem Ziel, den Prozess 12 in der geeigneten Weise zu beeinflussen.

Die Leitebene enthält eine Anzahl Rechner 3 und 4, die über ein Netzwerk 5 zwecks Datenaustausch miteinander verbunden sind. Der Rechner 4 ist zusätzlich via Bus 6 mit den Geräten 7 und 8 der Prozessebene verbunden.

Aufgabe des Rechners 4 ist es, den Datenaustausch mit den Geräten 7 und 8 der Feldebene zu organisieren. Im Rechnernetz 5 wirkt er zusätzlich als Server. Die Rechner 3 bearbeiten die verschiedenen Funktionen der Leitebene, wie Bedienen, Beobachten, Analysieren und Überwachen.

## Patentansprüche

1. Automatisierungssystem bestehend aus den Schichten Leitebene, Prozessebene, Feldebene, bei dem die Leitebene einen oder mehrere Rechner enthält,
**dadurch gekennzeichnet, dass** die Daten, die für die Leitebene bestimmt sind, in der Prozessebene und/oder Feldebene gespeichert und mit Zeitmarkierungen versehen werden.

2. Automatisierungssystem nach Anspruch 1,
**dadurch gekennzeichnet, dass** die Datenübertragung zur Leitebene online (augenblicklich) und/oder offline (zeitversetzt) erfolgt.

3. Automatisierungssystem nach einem der Ansprüch 1 oder 2,
**dadurch gekennzeichnet, dass** Daten, deren Inhalt eine schnelle Reaktion in der Leitebene erfordern, in einem speziellen Online-Speichersegment abgelegt werden.

4. Automatisierungssystem nach einem der Ansprüche 1 bis 3,
**dadurch gekennzeichnet, dass** eine Unterbrechungsinformation für die Leitebene ausgelöst wird, wenn Daten in dem Online-Speichersegment eingetroffen sind.

5. Automatisierungssystem nach einem der Ansprüch 1 bis 4,
**dadurch gekennzeichnet, dass** die Speichereinheit so ausgelegt wird, dass Datenverluste vermieden werden.

## Claims

1. Automation system comprising the layers comprising the command level (1), process level (2) and field level (3), in which the command level contains one or more computers (3a), **characterized in that** the data which are intended for the command level (1) are stored in the process level (2) and/or field level (3) and are provided with time markings.

2. Automation system according to Claim 1, **characterized in that** the data transmission to the command level (1) takes place online (instantaneously) and/or offline (with a time delay).

3. Automation system according to one of Claims 1 or 2, **characterized in that** data with a content which requires a rapid response in the command level (1) are stored in a special online memory segment.

4. Automation system according to one of Claims 1 to 3, **characterized in that** interruption information for the command level (1) is triggered if data have arrived in the online memory segment.

5. Automation system according to one of Claims 1 to 4, **characterized in that** the memory unit is designed in such a way that data losses are avoided.

## Revendications

1. Système d'automatisation, composé des couches qui sont le plan directeur (1), le plan de process (2), le plan de champ (3), avec un ou plusieurs ordinateurs (3a) dans le plan directeur,
**caractérisé en ce que**
les données qui sont définies pour le plan directeur (1), sont mémorisées dans le plan de process (2) et/ou dans le plan de champ (3) et dotées de marquages temporels.

2. Système d'automatisation selon la revendication 1,
**caractérisé en ce que**
la transmission des données au plan directeur (1) s'effectue online (à l'instant) et/ou offline (avec décalage temporel).

3. Système d'automatisation selon l'une quelconque des revendications 1 à 3,
**caractérisé en ce que**
des données, dont le contenu demande une réaction rapide dans le plan directeur (1), sont déposées dans un segment spécial de mémoire online.

4. Système d'automatisation selon l'une quelconque des revendications 1 à 4,
**caractérisé en ce qu'**
une information d'interruption pour le plan directeur (1) est déclenchée quand des données sont arrivées dans le segment de mémoire online.

5. Système d'automatisation selon l'une quelconque des revendications 1 à 4,
**caractérisé en ce que**
l'unité de mémoire est conçue de manière à éviter la perte de données.
